(19) Europäisches Patentamt
European Patent Office
Office européen des brevets

(11)     **EP 2 922 736 B1**

(12)     **FASCICULE DE BREVET EUROPEEN**

(45) Date de publication et mention
de la délivrance du brevet:
**05.10.2016 Bulletin 2016/40**

(51) Int Cl.:
**B60W 10/02** *(2006.01)*     **B60W 10/08** *(2006.01)*
**B60W 20/00** *(2016.01)*     **F16H 61/04** *(2006.01)*
**B60W 20/40** *(2016.01)*     **B60W 50/06** *(2006.01)*
**B60W 50/00** *(2006.01)*

(21) Numéro de dépôt: **13796051.4**

(22) Date de dépôt: **26.11.2013**

(86) Numéro de dépôt international:
**PCT/EP2013/074683**

(87) Numéro de publication internationale:
**WO 2014/080029 (30.05.2014 Gazette 2014/22)**

(54) **PROCÉDÉ ET DISPOSITIF CORRESPONDANT D'ACCOUPLEMENT ENTRE UN ARBRE D'UN MOTEUR ÉLECTRIQUE ET UN ARBRE DE ROUE D'UN VÉHICULE AUTOMOBILE À TRACTION ÉLECTRIQUE OU HYBRIDE**

VERFAHREN UND ENTSPRECHENDE VORRICHTUNG ZUR VERBINDUNG EINER WELLE EINES ELEKTROMOTORS MIT EINER RADACHSE EINES FAHRZEUGS MIT ELEKTROANTRIEB ODER HYBDRIDMOTOR

METHOD AND CORRESPONDING DEVICE FOR COUPLING A SHAFT OF AN ELECTRIC MOTOR WITH A WHEEL SHAFT OF AN ELECTRICALLY POWERED OR HYBRID MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.11.2012 FR 1261216**

(43) Date de publication de la demande:
**30.09.2015 Bulletin 2015/40**

(73) Titulaires:
• **Renault S.A.S.
92100 Boulogne-Billancourt (FR)**
• **MICHELIN Recherche et Technique S.A.
1763 Granges-Paccot (CH)**
• **Compagnie Générale des Etablissements Michelin
63000 Clermont-Ferrand (FR)**

(72) Inventeurs:
• **KETFI-CHERIF, Ahmed
F-78990 Elancourt (FR)**
• **LAUNAY, Grégory
F-75015 Paris (FR)**
• **MALOUM, Abdelmalek
F-94550 Chevilly La Rue (FR)**

(56) Documents cités:
**EP-A1- 2 138 371     EP-A2- 1 955 885
FR-A1- 2 954 441     US-A- 5 951 436**

**Description**

L'invention concerne les véhicules automobiles à traction électrique ou hybride et plus particulièrement l'accouplement d'un arbre de moteur électrique avec un arbre de roues.

On connaît des véhicules hybrides comprenant deux systèmes de traction, à savoir un moteur thermique et un moteur électrique. De manière classique, lors du passage d'un type de propulsion à un autre type de propulsion, les accouplements entre les arbres se font entre des arbres tournant à la même vitesse. Par exemple, au sein d'un véhicule roulant à une certaine vitesse, l'accouplement entre l'arbre d'un moteur électrique et celui des roues provoquera des à-coups si l'arbre du moteur électrique ne tourne pas à la même vitesse que les roues du véhicule. L'accouplement ou le désaccouplement peuvent être mis en oeuvre quand un seuil de vitesse est atteint.

Il est donc nécessaire de contrôler la vitesse du moteur électrique afin de la rendre égale à celle de l'arbre des roues lors d'une phase d'accouplement (par exemple quand la vitesse redescend sous un seuil).

A cet effet, il a été proposé dans la demande de brevet européen EP 2 138 371 de mettre en oeuvre un procédé dans lequel on commande un moteur électrique autour d'une vitesse de rotation proche mais pas nécessairement égale à celle de l'arbre des roues, et l'on utilise ensuite un dispositif de synchronisation mécanique pour obtenir une égalisation des vitesses. Cette solution a pour inconvénient de nécessiter un dispositif de synchronisation mécanique.

Par ailleurs, il est nécessaire d'amener rapidement la vitesse du moteur électrique au voisinage de celle des roues pour obtenir un accouplement presque instantané. D'autres solutions existantes permettent d'augmenter rapidement la vitesse du moteur électrique, mais une fois l'égalité obtenue, la vitesse du moteur peut continuer d'augmenter ce qui peut provoquer des à-coups.

La présente invention a donc pour but d'obtenir un accouplement entre un arbre de moteur électrique et un arbre de roue sans à-coup, c'est-à-dire avec des vitesses de rotation égales, et qui ne nécessite pas de dispositif de synchronisation.

L'invention a également pour but d'obtenir un accouplement rapide.

Selon un aspect, il est proposé un procédé d'accouplement entre un arbre d'un moteur électrique et un arbre de roue d'un véhicule automobile à traction électrique ou hybride, comprenant une mesure de la vitesse de rotation du moteur électrique et une mesure de la vitesse de rotation des roues.

Selon une caractéristique générale, le procédé comprend :

- une régulation en boucle fermée pour élaborer une première consigne de fonctionnement du moteur électrique à partir de la vitesse de rotation mesurée du moteur électrique et de la vitesse de rotation mesurée des roues, ladite régulation comprenant une intégration,
- une élaboration d'une deuxième consigne de fonctionnement à partir de la vitesse de rotation mesurée des roues affectée d'au moins un coefficient, par exemple une régulation par anticipation,
- une commande du fonctionnement du moteur autour d'une consigne de fonctionnement finale élaborée à partir d'une addition de la première et de la deuxième consigne de fonctionnement, et
- si la vitesse mesurée des roues affectée dudit au moins un coefficient est égale à la vitesse mesurée du moteur, un accouplement de l'arbre du moteur électrique avec l'arbre de roue.

La commande de fonctionnement finale ainsi élaborée permet d'obtenir une régulation de la vitesse de rotation du moteur électrique autour de la vitesse de rotation des roues éventuellement à un facteur multiplicateur près. En outre, il n'est pas nécessaire d'utiliser un synchronisateur mécanique.

La somme des consignes de fonctionnement élaborées d'une part par une boucle de régulation avec une intégration et d'autre part par anticipation permet d'obtenir une valeur finale de consigne de fonctionnement, par exemple une consigne de couple, qui est minimale quand les vitesses de rotations sont égales (à un coefficient multiplicateur près). Cette consigne minimale est la consigne de fonctionnement la plus petite que l'on peut transmettre au moteur électrique de manière à obtenir la vitesse désirée. On obtient ainsi une meilleure régulation de vitesse qui nécessite moins d'énergie.

On peut également noter que l'utilisation d'une consigne élaborée par anticipation permet de rendre plus rapide l'évolution de la vitesse du moteur électrique. En effet, lors de la mise en oeuvre du procédé (par exemple lorsque la vitesse de rotation du moteur électrique est nulle), la vitesse des roues qui n'est pas nulle est directement utilisée pour élaborer la deuxième consigne de fonctionnement ce qui augmente rapidement la vitesse de rotation du moteur électrique.

La régulation en boucle fermée peut comprendre une comparaison entre d'une part la vitesse mesurée des roues affectée d'un premier coefficient, par exemple un coefficient multiplicateur correspondant à une réduction entre l'arbre du moteur et l'arbre des roues, additionnée au retour de la première consigne de fonctionnement affectée d'un deuxième coefficient, et d'autre part la vitesse mesurée du moteur électrique, une intégration du résultat de la comparaison et, une multiplication du résultat de l'intégration par un troisième coefficient de manière à obtenir la première consigne de fonctionnement.

Le deuxième coefficient peut être choisi de manière à augmenter la valeur de l'écart entre les vitesses et ainsi accélérer la régulation et donc par exemple l'augmentation de la vitesse du moteur électrique.

Le troisième coefficient dans la boucle de retour peut être choisi pour adoucir l'augmentation de la vitesse du moteur électrique quand cette vitesse s'approche de celle des roues. En effet, la multiplication par un troisième coefficient permet de réduire la valeur de la dérivée de la consigne en se rapprochant de l'égalité des vitesses. On obtient donc une valeur de consigne finale davantage minimale pour obtenir la vitesse désirée, ce qui permet d'obtenir un accouplement sans à-coups.

L'élaboration de la deuxième consigne de fonctionnement peut comprendre une multiplication de la vitesse de rotation mesurée des roues par un quatrième coefficient. On multiplie ainsi la vitesse de rotation par le premier coefficient qui peut être un coefficient multiplicateur correspondant à une réduction entre les arbres, et par un autre coefficient pour l'élaboration de la consigne par anticipation.

Le quatrième coefficient peut quant à lui être choisi pour accélérer davantage l'évolution de la vitesse du moteur électrique, et ce sans provoquer d'instabilité. En effet, il multiplie dès la mise en oeuvre du procédé la vitesse mesurée des roues qui n'est pas nulle lors de l'accouplement.

Le procédé peut comprendre, en outre, postérieurement à l'étape d'addition de la première consigne de fonctionnement et de la deuxième consigne de fonctionnement, une comparaison entre d'une part la somme de la première consigne de fonctionnement et de la deuxième consigne de fonctionnement, et d'autre part la vitesse mesurée du moteur électrique affectée d'un cinquième coefficient, pour en déduire la consigne de fonctionnement finale pour le moteur électrique.

Le cinquième coefficient peut également être choisi pour accélérer l'évolution de la vitesse une fois que la vitesse mesurée du moteur électrique n'est plus nulle.

Bien entendu, l'homme du métier saura choisir les différents coefficients pour obtenir une évolution rapide de la vitesse du moteur électrique, et un adoucissement de cette évolution avant l'accouplement.

Le véhicule peut comprendre un premier moteur électrique pour une première roue et un deuxième moteur électrique pour une deuxième roue et l'on met en oeuvre simultanément l'accouplement de l'arbre du premier moteur électrique avec l'arbre de la première roue et l'accouplement de l'arbre du deuxième moteur électrique avec l'arbre de la deuxième roue.

L'invention est particulièrement bien adaptée aux véhicules munis de deux machines électriques respectivement liées à des roues, par exemple les roues du train arrière. Du fait de la symétrie du train arrière, les calculs de consignes de fonctionnement sont les mêmes pour les deux machines

Selon un autre aspect, il est proposé un dispositif de commande d'accouplement entre un arbre d'un moteur électrique et un arbre de roue d'un véhicule automobile à traction électrique ou hybride, le véhicule comprenant des moyens de mesure de la vitesse de rotation du moteur électrique et des moyens de mesure de la vitesse de rotation des roues.

Selon une caractéristique générale, le dispositif comprend une unité de calcul comportant :

- des moyens de régulation en boucle fermée pour élaborer une première consigne de fonctionnement du moteur électrique à partir de la vitesse de rotation mesurée du moteur électrique et de la vitesse de rotation mesurée des roues, les moyens de régulation comprenant des moyens d'intégration,
- des moyens d'élaboration d'une deuxième consigne de fonctionnement à partir de la vitesse de rotation mesurée des roues affectée d'au moins un coefficient,
- des moyens de commande du fonctionnement du moteur électrique autour d'une consigne de fonctionnement finale, les moyens de commande comportant un additionneur de la première et de la deuxième consigne de fonctionnement, et
- des moyens de commande de l'accouplement de l'arbre du moteur électrique avec l'arbre de la roue si la vitesse mesurée des roues affectée dudit au moins un coefficient est égale à la vitesse mesurée du moteur.

Les moyens de régulation en boucle fermée peuvent comprendre des moyens de comparaison entre d'une part la vitesse mesurée des roues affectée d'un premier coefficient additionnée au retour de la première consigne de fonctionnement affectée d'un deuxième coefficient et d'autre part la vitesse mesurée du moteur électrique, des moyens d'intégration du résultat de la comparaison et, des moyens de multiplication du résultat de l'intégration par un troisième coefficient de manière à obtenir la première consigne de fonctionnement.

Les moyens d'élaboration de la deuxième consigne de fonctionnement peuvent comprendre des moyens de multiplication de la vitesse de rotation mesurée des roues par un quatrième coefficient.

Le dispositif peut comprendre, en outre, des moyens de comparaison entre d'une part la somme de la première consigne de fonctionnement et de la deuxième consigne de fonctionnement, et d'autre part la vitesse mesurée du moteur électrique affectée d'un cinquième coefficient, pour obtenir la consigne de fonctionnement finale pour le moteur électrique.

Le véhicule peut comprendre un premier moteur électrique pour une première roue et un deuxième moteur électrique pour une deuxième roue, le dispositif étant apte à commander simultanément l'accouplement de chaque arbre de moteur électrique sur chaque arbre de roue.

D'autres buts, caractéristiques et avantages apparaîtront à la lecture de la description suivante donnée uniquement en tant qu'exemple non limitatif et faite en référence aux dessins annexés sur lesquels :

- les figures 1a, 1b, 1c, 2a, 2b et 2c illustrent schématiquement l'accouplement d'un arbre de roues et d'un arbre de moteur électrique,
- la figure 3 illustre schématiquement un mode de mise en oeuvre selon l'invention, et
- les figures 4a, 4b et 4c illustrent l'évolution de la vitesse et d'autres paramètres du moteur électrique en fonction du temps lors d'un accouplement.

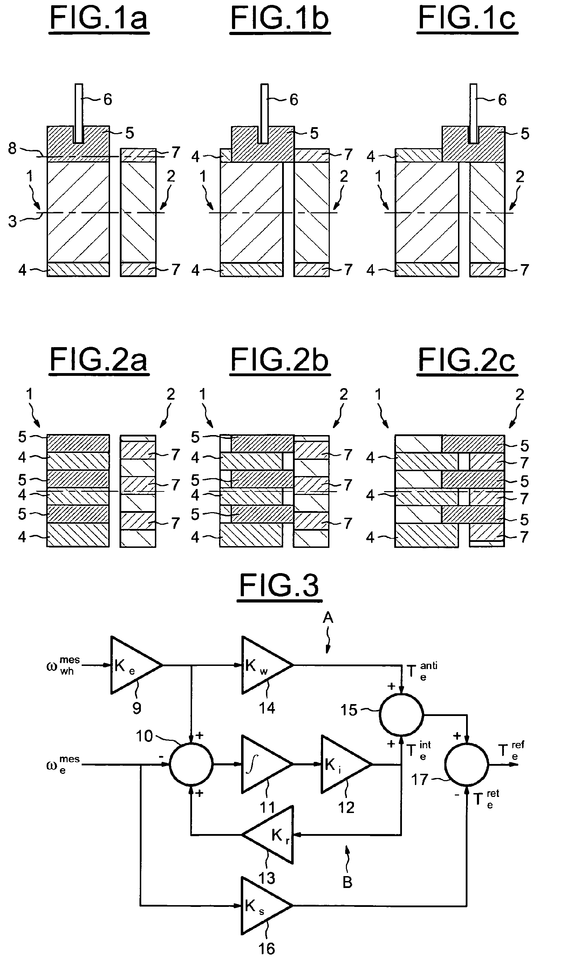

Sur la figure 1a, on a représenté un premier pignon 1, par exemple lié à l'arbre d'un moteur électrique, et un deuxième pignon 2, par exemple lié à l'arbre d'une roue. Les premier et deuxième pignons 1 et 2 sont représentés de face, leur axe de rotation 3 étant représenté par un trait discontinu. Le pignon 1 comporte un ensemble de dents dont une dent 4 est visible. Un baladeur 5, permettant des accouplements d'arbres, est accouplé à des dents du pignon 1. Le baladeur 5 peut subir un mouvement de translation par l'action d'une fourchette 6.

Le deuxième pignon est muni de plusieurs dents 7 et peut, dans le cas représenté sur la figure 1a, avoir un mouvement de rotation uniquement lié à celui des roues.

Sur la figure 2a, on a représenté une autre vue des pignons 1 et 2 correspondant à une vue dans le plan de coupe portant la référence 8 sur la figure 1a. Le baladeur 5 comporte plusieurs dents 5 accouplées avec les dents 4 du pignon 1. Sur cette figure, les dents 7 du pignon 2 sont libres.

Les figures 1b et 2b représentent les premier et deuxième pignons 1 et 2 après une première translation du baladeur 5. La translation peut être mise en oeuvre quand les vitesses de rotation des deux pignons sont égales, par exemple lorsque les vitesses de rotation des roues et du moteur électrique sont égales à un facteur multiplicateur près.

Sur les figures 1c et 2c, on a représenté les premier et deuxième pignons 1 et 2 avec le baladeur dans sa position finale correspondant à un accouplement entre les pignons 1 et deux et donc entre l'arbre du moteur électrique et l'arbre d'au moins une roue.

Il convient de noter que l'égalité des vitesses permet d'éviter l'apparition d'à-coups lors de l'accouplement des arbres. A cet effet, il est nécessaire de commander la vitesse du moteur électrique, et donc du pignon 1 pour obtenir un accouplement de bonne qualité, et ce sans nécessiter de synchronisateur mécanique.

Sur la figure 3, on a représenté de manière schématique un exemple de dispositif de commande d'accouplement selon l'invention, réalisant une régulation de la vitesse du moteur électrique pour permettre un accouplement. Cette régulation ainsi que le dispositif peuvent être mis en oeuvre au sein d'une unité de calcul, par exemple une unité de commande électronique située au sein d'un véhicule automobile à traction électrique ou hybride.

Ce dispositif comprend en premier lieu des moyens de mesure de la vitesse de rotation d'au moins

une roue notée $\omega_{wh}^{mes}$ et la vitesse de rotation du moteur électrique d'un véhicule automobile notée $\omega_e^{mes}$. Ces vitesses de rotation sont mesurées, par exemple, par des capteurs de vitesse de rotation du véhicule. Ce dispositif comprend en outre des moyens de régulation en boucle fermée B, des moyens d'élaboration d'une consigne de fonctionnement par anticipation A et des moyens de commande de l'accouplement non représentés d'un arbre de moteur électrique avec un arbre de roue.

La vitesse $\omega_{wh}^{mes}$ mesurée peut être fournie à des moyens de multiplication 9, pour une multiplication par un premier coefficient noté $K_e$ correspondant par exemple à un facteur de réduction entre l'arbre de roue et l'arbre du moteur électrique. En d'autres termes, l'accouplement peut se produire si l'équation suivante est vérifiée : $\omega_{wh}^{mes} K_e = \omega_e^{mes}$

La vitesse de rotation mesurée des roues $\omega_{wh}^{mes}$ affectée par le coefficient $K_e$ est ensuite comparée à la vitesse de rotation mesurée du moteur électrique $\omega_e^{mes}$ dans un comparateur 10. Ces deux vitesses de rotation sont les deux entrées de la boucle de régulation B. La sortie du comparateur 10 est reliée à des moyens d'intégration 11. L'utilisation des moyens d'intégration 11 permet d'atténuer l'écart entre les vitesses.

La sortie des moyens d'intégration 11 est reliée à des moyens de multiplication 12 par un autre coefficient $K_i$, permettant d'obtenir en sortie de la boucle de régulation B une consigne de fonctionnement pour un moteur électrique (notée $T_e^{int}$). Le coefficient $K_i$ est choisi pour augmenter l'écart obtenu en sortie du comparateur et donc faire évoluer plus rapidement la vitesse de rotation du moteur électrique. Cette consigne est bouclée à une autre entrée du comparateur 10 après une multiplication (moyens de multiplication 13) par un autre coefficient $K_r$, choisi pour obtenir un adoucissement de l'évolution de la vitesse de rotation du moteur électrique au voisinage de la vitesse de rotation des roues.

La vitesse de rotation mesurée des roues $\omega_{wh}^{mes}$ affectée par le coefficient $K_e$ est également utilisée au sein des moyens A pour élaborer une consigne de fonctionnement par anticipation, après une multiplication par un coefficient $K_w$ par les moyens de multiplication 14. Cette anticipation permet, avant même la régulation, d'envoyer une consigne de couple au moteur électrique afin de gagner en réactivité. Le paramètre $K_w$ est défini essentiellement par les caractéristiques propres du moteur, et notamment son inertie, ainsi que par les conditions de stabilité du système. On obtient en sortie des moyens de multiplication 14 une consigne de fonctionnement notée $T_e^{anti}$.

Les deux consignes de fonctionnement $T_e^{anti}$

et $T_e^{\text{int}}$ sont ensuite additionnées par les moyens d'addition 15. En outre, de manière à obtenir encore plus rapidement une égalité entre les vitesses de rotation (à un facteur multiplicateur près), on peut utiliser un retour d'état grâce à des moyens de multiplication 16 de la vitesse de rotation mesurée du moteur électrique $\omega_e^{mes}$ avec une multiplication par un coefficient $K_s$ pour obtenir une consigne de fonctionnement $\left( T_e^{ret} \right)$ et une comparaison par des moyens de comparaison 17. La sortie des moyens de comparaison 17 (consigne de fonctionnement $T_e^{ref}$) est ensuite fournie au moteur électrique, par exemple pour augmenter sa vitesse de rotation et atteindre celle des roues (à un facteur multiplicateur près). Des moyens de commande de l'accouplement peuvent alors mettre en oeuvre l'accouplement.

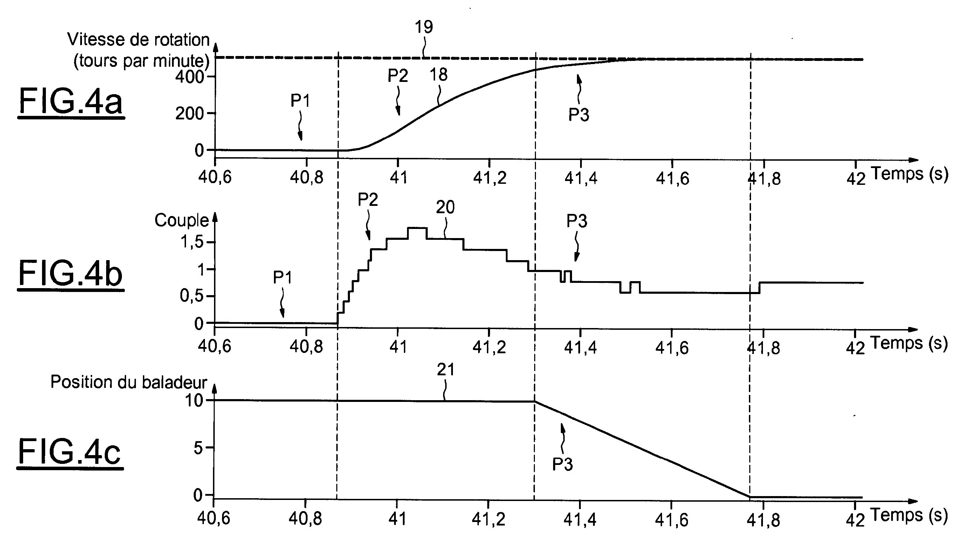

Sur la figure 4a, on a représenté l'évolution de la vitesse de rotation du moteur électrique (courbe 18 en trait continu) et de la vitesse de rotation des roues (courbe 19 en trait discontinu) au sein d'un véhicule automobile apte à mettre en oeuvre un procédé selon l'invention. La vitesse des roues est ici constante, supérieure à 400 tours par minute.

Avant l'accouplement des arbres, la vitesse de rotation du moteur électrique est nulle (phase P1). Puis, la vitesse augmente rapidement dans une phase P2, notamment grâce à l'élaboration d'une consigne par anticipation. Enfin, dans une phase P3, la vitesse de rotation du moteur électrique évolue plus doucement, notamment grâce à l'action intégrale avec une boucle de retour. On peut ainsi mettre en oeuvre un accouplement entre les deux arbres sans à-coups ressentis par le conducteur du véhicule.

Sur la figure 4b, on a représenté l'évolution de la consigne de couple fournie au moteur électrique (courbe 20). La phase P1 correspond ici à une valeur de consigne nulle (phase P1), la phase P2 à une évolution rapide de la consigne, et la phase P3 à une diminution de la consigne de manière à obtenir une vitesse de rotation du moteur électrique stabilisée autour de la vitesse des roues.

Enfin, sur la figure 4c, on a représenté l'évolution de la position du baladeur 5 (courbe 21) permettant d'obtenir l'accouplement, par exemple le baladeur 5. On peut noter que la position du baladeur ne passe de la position libre à la position accouplée qu'à partir de la phase P3.

On obtient un accouplement qui nécessite une durée d'une seconde entre le début de la phase P2 et la fin de l'accouplement (baladeur en position finale).

Grâce à l'invention, on obtient un accouplement rapide, nécessitant moins de pièces mécaniques, et sans à-coups. Ainsi, on peut réduire le coût des composants et prolonger la durée de vie des pièces mécaniques qui est réduite lors de l'apparition d'à-coups.

## Revendications

1. Procédé d'accouplement entre un arbre d'un moteur électrique et un arbre de roue d'un véhicule automobile à traction électrique ou hybride, comprenant une mesure de la vitesse de rotation du moteur électrique $\left( \omega_e^{mes} \right)$ et une mesure de la vitesse de rotation des roues $\left( \omega_{wh}^{mes} \right)$, ledit procédé étant **caractérisé en ce qu'**il comprend :

   - une régulation en boucle fermée pour élaborer une première consigne de fonctionnement $\left( T_e^{\text{int}} \right)$ du moteur électrique à partir de la vitesse de rotation mesurée du moteur électrique et de la vitesse de rotation mesurée des roues, ladite régulation comprenant une intégration,
   - une élaboration d'une deuxième consigne de fonctionnement $\left( T_e^{anti} \right)$ à partir de la vitesse de rotation mesurée des roues affectée d'au moins un coefficient,
   - une commande du fonctionnement du moteur autour d'une consigne de fonctionnement finale $\left( T_e^{ref} \right)$ élaborée à partir d'une addition de la première et de la deuxième consigne de fonctionnement, et
   - si la vitesse mesurée des roues affectée dudit au moins un coefficient est égale à la vitesse mesurée du moteur, un accouplement de l'arbre du moteur électrique avec l'arbre de roue.

2. Procédé selon la revendication 1, dans lequel la régulation en boucle fermée comprend une comparaison entre d'une part la vitesse mesurée des roues affectée d'un premier coefficient ($K_e$) additionnée au retour de la première consigne de fonctionnement affectée d'un deuxième coefficient ($K_r$) et d'autre part la vitesse mesurée du moteur électrique, une intégration du résultat de la comparaison et, une multiplication du résultat de l'intégration par un troisième coefficient ($K_i$) de manière à obtenir la première consigne de fonctionnement $\left( T_e^{\text{int}} \right)$.

3. Procédé selon la revendication 1 ou 2, dans lequel l'élaboration de la deuxième consigne de fonctionnement comprend une multiplication de la vitesse de rotation mesurée des roues par un quatrième coefficient ($K_w$).

4. Procédé selon l'une quelconque des revendications précédentes, comprenant en outre postérieurement à l'étape d'addition de la première consigne de fonctionnement et de la deuxième consigne de fonctionnement, une comparaison entre d'une part la somme de la première consigne de fonctionnement et de la deuxième consigne de fonctionnement, et d'autre part la vitesse mesurée du moteur électrique affectée d'un cinquième coefficient ($K_s$), pour en déduire la consigne de fonctionnement finale pour le moteur électrique.

**5.** Procédé selon l'une quelconque des revendications précédentes, dans lequel le véhicule comprend un premier moteur électrique pour une première roue et un deuxième moteur électrique pour une deuxième roue et l'on met en oeuvre simultanément l'accouplement de l'arbre du premier moteur électrique avec l'arbre de la première roue et l'accouplement de l'arbre du deuxième moteur électrique avec l'arbre de la deuxième roue.

**6.** Dispositif de commande d'accouplement entre un arbre d'un moteur électrique et un arbre de roue d'un véhicule automobile à traction électrique ou hybride, le véhicule comprenant des moyens de mesure de la vitesse de rotation du moteur électrique $\left( \omega_e^{mes} \right)$ et des moyens de mesure de la vitesse de rotation des roues $\left( \omega_{wh}^{mes} \right)$, **caractérisé en ce qu'**il comprend une unité de calcul comportant :

    - des moyens de régulation en boucle fermée pour élaborer une première consigne de fonctionnement $\left( T_e^{int} \right)$ du moteur électrique à partir de la vitesse de rotation mesurée du moteur électrique et de la vitesse de rotation mesurée des roues, les moyens de régulation comprenant des moyens d'intégration,
    - des moyens d'élaboration d'une deuxième consigne de fonctionnement $\left( T_e^{anti} \right)$ à partir de la vitesse de rotation mesurée des roues affectée d'au moins un coefficient,
    - des moyens de commande du fonctionnement du moteur électrique autour d'une consigne de fonctionnement finale $\left( T_e^{ref} \right)$, les moyens de commande comportant un additionneur de la première et de la deuxième consigne de fonctionnement, et
    - des moyens de commande de l'accouplement de l'arbre du moteur électrique avec l'arbre de la roue si la vitesse mesurée des roues affectée dudit au moins un coefficient est égale à la vitesse mesurée du moteur.

**7.** Dispositif selon la revendication 6, dans lequel les moyens de régulation en boucle fermée comprennent des moyens de comparaison entre d'une part la vitesse mesurée des roues affectée d'un premier coefficient ($K_e$) additionnée au retour de la première consigne de fonctionnement affectée d'un deuxième

coefficient ($K_r$) et d'autre part la vitesse mesurée du moteur électrique, des moyens d'intégration du résultat de la comparaison et, des moyens de multiplication du résultat de l'intégration par un troisième coefficient ($K_i$) de manière à obtenir la première consigne de fonctionnement.

**8.** Dispositif selon la revendication 6 ou 7, dans lequel les moyens d'élaboration de la deuxième consigne de fonctionnement comprennent des moyens de multiplication de la vitesse de rotation mesurée des roues par un quatrième coefficient ($K_w$).

**9.** Dispositif selon l'une quelconque des revendications 6 à 8, comprenant en outre des moyens de comparaison entre d'une part la somme de la première consigne de fonctionnement et de la deuxième consigne de fonctionnement, et d'autre part la vitesse mesurée du moteur électrique affectée d'un cinquième coefficient ($K_s$), pour obtenir la consigne de fonctionnement finale pour le moteur électrique.

**10.** Dispositif selon l'une quelconque des revendications 6 à 9, dans lequel le véhicule comprend un premier moteur électrique pour une première roue et un deuxième moteur électrique pour une deuxième roue, le dispositif étant apte à commander simultanément l'accouplement de chaque arbre de moteur électrique sur chaque arbre de roue.

**Patentansprüche**

**1.** Verfahren zur Verbindung einer Welle eines Elektromotors mit einer Radachse eines Kraftfahrzeugs mit Elektroantrieb oder Hybridmotor, umfassend ein Messen der Drehzahl des Elektromotors ($\omega_e^{mes}$) und ein Messen der Drehzahl der Räder ($\omega_{wh}^{mes}$), wobei das Verfahren **dadurch gekennzeichnet ist, dass** es Folgendes aufweist:

    - ein Regeln mit geschlossener Schleife, um einen ersten Betriebssollwert ($T_e^{int}$) des Elektromotors ausgehend von der gemessenen Drehzahl des Elektromotors und der gemessenen Drehzahl der Räder zu erstellen, wobei das Regeln ein Integrieren aufweist,
    - ein Erstellen eines zweiten Betriebssollwerts ($T_e^{anti}$) ausgehend von der gemessenen Drehzahl der Räder, auf die mindestens ein Koeffizient angewandt wird,
    - ein Steuern des Betriebs des Motors um einen endgültigen Betriebssollwert ($T_e^{ref}$), der ausgehend von einer Addition des ersten und des zweiten Betriebssollwerts erstellt wird, und
    - wenn die gemessene Drehzahl der Räder, auf die der mindestens eine Koeffizient angewandt wird, gleich der gemessenen Drehzahl des Motors ist, ein Verbinden der Welle des Elektromotors mit der Radachse.

2. Verfahren nach Anspruch 1, wobei das Regeln mit geschlossener Schleife ein Vergleichen zwischen einerseits der gemessenen Drehzahl der Räder, auf die ein erster Koeffizient ($K_e$) angewandt wird, zu der bei der Rückführung der erste Betriebssollwert addiert wird, auf den ein zweiter Koeffizient ($K_r$) angewandt wird, und andererseits der gemessenen Drehzahl des Elektromotors, ein Integrieren des Ergebnisses des Vergleichens und ein Multiplizieren des Ergebnisses des Integrierens mit einem dritten Koeffizienten ($K_i$) derart aufweist, um den ersten Betriebssollwert ($T_e^{int}$) zu erhalten.

3. Verfahren nach Anspruch 1 oder 2, wobei das Erstellen des zweiten Betriebssollwerts ein Multiplizieren der gemessenen Drehzahl der Räder mit einem vierten Koeffizienten ($K_w$) aufweist.

4. Verfahren nach einem der vorhergehenden Ansprüche, das ferner nach dem Schritt des Addierens des ersten Betriebssollwerts und des zweiten Betriebssollwerts ein Vergleichen zwischen einerseits der Summe des ersten Betriebssollwerts und des zweiten Betriebssollwerts und andererseits der gemessenen Drehzahl des Elektromotors, auf die ein fünfter Koeffizient ($k_s$) angewandt wird, aufweist, um daraus den endgültigen Betriebssollwert für den Elektromotor abzuleiten.

5. Verfahren nach einem der vorhergehenden Ansprüche, wobei das Fahrzeug einen ersten Elektromotor für ein erstes Rad und einen zweiten Elektromotor für ein zweites Rad aufweist und wobei gleichzeitig das Verbinden der Welle des ersten Elektromotors mit der Achse des ersten Rads und das Verbinden der Welle des zweiten Elektromotors mit der Achse des zweiten Rads durchgeführt wird.

6. Vorrichtung zur Steuerung der Verbindung einer Welle eines Elektromotors mit einer Radachse eines Kraftfahrzeugs mit Elektroantrieb oder Hybridmotor, wobei das Fahrzeug Mittel zum Messen der Drehzahl des Elektromotors $(\omega_e^{mes})$ und Mittel zum Messen der Drehzahl der Räder ($\omega_h^{mes}$) aufweist, **dadurch gekennzeichnet, dass** sie eine Recheneinheit aufweist, die Folgendes aufweist:

- Mittel zum Regeln mit geschlossener Schleife, um einen ersten Betriebssollwert ($T_e^{int}$) des Elektromotors ausgehend von der gemessenen Drehzahl des Elektromotors und der gemessenen Drehzahl der Räder zu erstellen, wobei die Mittel zum Regeln Mittel zum Integrieren aufweisen,
- Mittel zum Erstellen eines zweiten Betriebssollwerts ($T_e^{anti}$) ausgehend von der gemessenen Drehzahl der Räder, auf die mindestens ein Koeffizient angewandt wird,
- Mittel zum Steuern des Betriebs des Elektromotors um einen endgültigen Betriebssollwert ($T_e^{rel}$), wobei die Mittel zum Steuern einen Addierer des ersten und des zweiten Betriebssollwerts aufweisen, und
- Mittel zum Steuern der Verbindung der Welle des Elektromotors mit der Radachse, wenn die gemessene Drehzahl der Räder, auf die der mindestens eine Koeffizient angewandt wird, gleich der gemessenen Geschwindigkeit des Motors ist.

7. Vorrichtung nach Anspruch 6, wobei die Mittel zum Regeln mit geschlossener Schleife Mittel zum Vergleichen zwischen einerseits der gemessenen Drehzahl der Räder, auf die ein erster Koeffizient ($K_e$) angewandt wird, zu der bei der Rückführung der erste Betriebssollwert addiert wird, auf den ein zweiter Koeffizient ($K_r$) angewandt wird, und andererseits der gemessenen Drehzahl des Elektromotors, Mittel zum Integrieren des Ergebnisses des Vergleichens und Mittel zum Multiplizieren des Ergebnisses des Integrierens mit einem dritten Koeffizienten ($K_i$) derart aufweist, um den ersten Betriebssollwert zu erhalten.

8. Vorrichtung nach Anspruch 6 oder 7, wobei die Mittel zum Erstellen des zweiten Betriebssollwerts Mittel zum Multiplizieren der gemessenen Drehzahl der Räder mit einem vierten Koeffizienten ($K_w$) aufweisen.

9. Vorrichtung nach einem der Ansprüche 6 bis 8, die ferner Mittel zum Vergleichen zwischen einerseits der Summe des ersten Betriebssollwerts und des zweiten Betriebssollwerts und andererseits der gemessenen Drehzahl des Elektromotors, auf die ein fünfter Koeffizient ($K_s$) angewandt wird, aufweist, um den endgültigen Betriebssollwert für den Elektromotor zu erhalten.

10. Vorrichtung nach einem der Ansprüche 6 bis 9, wobei das Fahrzeug einen ersten Elektromotor für ein erstes Rad und einen zweiten Elektromotor für ein zweites Rad aufweist, wobei die Vorrichtung geeignet ist, gleichzeitig das Verbinden von jeder Welle des Elektromotors auf jeder Radachse zu steuern.

**Claims**

1. Method for coupling an electric motor shaft with a wheel shaft of an electrically powered or hybrid motor vehicle, said method comprising a measurement of the speed of rotation of the electric motor ( $\omega_e^{mes}$ ) and a measurement of the speed of rotation of the wheels ( $\omega_{wh}^{mes}$ ) , said method being **characterized in that** it comprises:

- a closed-loop control to formulate a first operating setpoint ( $T_e^{\text{int}}$ ) for the electric motor on the basis of the measured speed of rotation of the electric motor and the measured speed of rotation of the wheels, said control involving an integration,
- formulating a second operating setpoint ( $T_e^{anti}$ ) on the basis of the measured speed of rotation of the wheels to which at least one coefficient is applied,
- control of the operation of the motor around a final operating setpoint ( $T_e^{ref}$ ) formulated on the basis of adding together the first and second operating setpoints, and
- if the measured speed of the wheels to which said at least one coefficient is applied is equal to the measured speed of the motor, a coupling of the shaft of the electric motor with the wheel shaft.

2. Method according to Claim 1, wherein the closed-loop control comprises a comparison between on the one hand the measured speed of the wheels to which a first coefficient ($K_e$) is applied added to the feedback of the first operating setpoint to which a second coefficient ($K_r$) is applied, and on the other hand the measured speed of the electric motor, an integration of the results of the comparison, and a multiplication of the results of the integration by a third coefficient ($K_i$) so as to obtain the first operating setpoint ( $T_e^{\text{int}}$ ) .

3. Method according to Claim 1 or 2, wherein the formulation of the second operating setpoint involves a multiplication of the measured speed of rotation of the wheels by a fourth coefficient ($K_w$).

4. Method according to any one of the preceding claims, further comprising, subsequently to the step of adding together the first operating setpoint and the second operating setpoint, a comparison between on the one hand the sum of the first operating setpoint and the second operating setpoint, and on the other hand the measured speed of the electric motor to which a fifth coefficient ($K_s$) is applied, so as to deduce from this the final operating setpoint for the electric motor.

5. Method according to any one of the preceding claims, wherein the vehicle comprises a first electric motor for a first wheel and a second electric motor for a second wheel, the shaft of the first electric motor being coupled with the shaft of the first wheel at the same time as the coupling of the shaft of the second electric motor with the shaft of the second wheel.

6. Device for controlling the coupling between a shaft of an electric motor and a wheel shaft of an electrically powered or hybrid vehicle, the vehicle comprising means for measuring the speed of rotation of the electric motor ( $\omega_e^{mes}$ ) and means for measuring the speed of rotation of the wheels ( $\omega_{wh}^{mes}$ ) , **characterized in that** said device comprises a calculating unit comprising:

- closed-loop control means for formulating a first operating setpoint ( $T_e^{\text{int}}$ ) of the electric motor on the basis of the measured speed of rotation of the electric motor and the measured speed of rotation of the wheels, the control means comprising integration means,
- means for formulating a second operating setpoint ( $T_e^{anti}$ ) on the basis of the measured speed of rotation of the wheels to which at least one coefficient is applied,
- means for controlling the operation of the electric motor around a final operating setpoint ( $T_e^{ref}$ ) , the control means comprising an adder for adding together the first and the second operating setpoint, and
- means for controlling the coupling of the shaft of the electric motor with the shaft of the wheel if the measured speed of the wheels to which said at least one coefficient is applied is equal to the measured speed of the motor.

7. Device according to Claim 6, wherein the closed-loop control means comprise means for comparison between on the one hand the measured speed of the wheels to which a first coefficient ($K_e$) is applied added to the feedback of the first operating setpoint to which a second coefficient ($K_r$) is applied, and on the other hand the measured speed of the electric motor, means for integration of the result of the comparison, and means for multiplying the result of the integration by a third coefficient ($K_i$) so as to obtain the first operating setpoint.

8. Device according to Claim 6 or 7, wherein the means for formulating the second operating setpoint comprise means for multiplying the measured speed of rotation of the wheels by a fourth coefficient ($K_w$).

9. Device according to any one of Claims 6 to 8, further comprising means for comparison between on the one hand the sum of the first operating setpoint and the second operating setpoint, and on the other hand the measured speed of the electric motor to which a fifth coefficient ($K_S$) is applied, in order to obtain the final operating setpoint for the electric motor.

10. Device according to any one of Claims 6 to 9, wherein the vehicle comprises a first electric motor for a first wheel and a second electric motor for a second wheel, the device being able to control simultaneously the coupling of each electric motor shaft on each wheel shaft.

# FIG.1a    FIG.1b    FIG.1c

# FIG.2a    FIG.2b    FIG.2c

# FIG.3

Vitesse de rotation
(tours par minute)

FIG.4a

19

400

200

0

P1

P2    18

P3

40,6    40,8    41    41,2    41,4    41,6    41,8    42 Temps (s)

Couple

FIG.4b

P2

20

1,5

1

0,5

0

P1

P3

40,6    40,8    41    41,2    41,4    41,6    41,8    42 Temps (s)

Position du baladeur

FIG.4c

21

10

5

0

P3

40,6    40,8    41    41,2    41,4    41,6    41,8    42 Temps (s)

EP 2 922 736 B1

**EP 2 922 736 B1**

**RÉFÉRENCES CITÉES DANS LA DESCRIPTION**

**Documents brevets cités dans la description**

- EP 2138371 A